# EUROPEAN PATENT APPLICATION

(11) **EP 4 746 440 A1**
(43) Date of publication of application: **20.05.2026**
(21) Application number: 24213211.6
(22) Date of filing: 15.11.2024
(51) Int. Cl.: H04Q 9/00

(54) **IMPROVED SECURITY MONITORING AND SMART-HOME SYSTEM**

(71) Applicant: Verisure Sàrl, 1290 Versoix (CH)
(72) Inventor: PIEDBOIS, Julien, 1290 Versoix (CH); HACKETT, Nicolas, 1290 Versoix (CH)
(74) Representative: Hansson Thyresson AB

(57) **Abstract**

There is provided a smart-home system for installation in a premises, the smart home system comprising: one or more smart devices, and an electrical discharge detector configured to detect electrical discharges in electrical wiring of the premises. There is also provided a method of operating a system of a premises, wherein the method comprises: detecting, by an electrical discharge detector of the system, an electrical discharge in electrical wiring of the premises, and transmitting a command to one or more smart devices of the system instructing the one or more smart devices to be turned off.

## Description

### TECHNICAL FIELD

The present invention relates to a security monitoring system installed alongside a smart-home system comprising an electrical discharge detector for detecting electrical discharges in electrical wiring, and to methods of operating the same.

### BACKGROUND

Security installations that are or include security monitoring systems for monitoring premises (e.g. a building such as a home), often referred to as alarm systems, typically provide means for detecting undesirable security or safety events and reacting to detected events. Such detection means may include Wi-Fi sensing systems, presence sensors, motion sensors and/or perimeter sensors for monitoring an area of the premises and detecting an unauthorized intruder entering or moving within or around the premises. Additionally, or alternatively, the means may include fire detection means such as a smoke detector for detecting smoke likely originating from a fire inside the premises.

Such systems may be self-contained, with alarm indicators such as sirens and flashing lights that may be activated when an undesirable security or safety event is detected. Alternatively, or additionally, such systems may be linked to a remote monitoring centre where, typically, human operators manage the responses required by different alarm and notification types.

Hence, the security monitoring systems can alert a user (e.g. a homeowner) or an operator (e.g. at a remote monitoring centre or at the emergency services) that an undesirable security or safety event has occurred. Accordingly, such security monitoring systems contribute to the safety and wellbeing of occupants of the protected premises as well as safeguarding articles within the protected premises.

However, a smoke detector may only detect smoke after a fire has generated a sufficient amount of smoke. At this point in time, the occupants of the premises and/or the premises themselves (e.g. if no occupants are present in the premises) may face significant danger even if the security monitoring system alerts the occupant (e.g. by a siren), an operator and/or the emergency services.

From the above, it is understood that there is room for improvements in security monitoring systems and the invention aims to solve or at least mitigate the above and other problems. Accordingly, embodiments of the present invention seek to provide enhanced security monitoring systems, methods and other implementations that improve the scope of such systems to address aspects of safety and security as well as providing new functionality and methods.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect, there is provided a smart-home system for installation in a premises, the smart home system comprising: one or more smart devices, and an electrical discharge detector configured to detect electrical discharges in electrical wiring of the premises. The provision of the electrical discharge detector allows the smart-home system to detect electrical discharges which could be precursors of a potential fire. Hence the safety of the premises and any occupants may potentially be improved.

The system may further be configured to, in response to a detected electrical discharge, transmit a command to at least one of the smart devices instructing the at least one smart device, and in particular at least one smart device connected to the electrical wiring, to be turned off. Hence, a load on the electrical wiring may be reduced upon detection of an electrical discharge, which in turn may reduce the risk of a potential fire arising as a consequence of the detected electrical discharge or any subsequent electrical discharges.

The smart-home system may optionally comprise a smart-home controller configured to transmit the command to the at least one smart device. Optionally, the one or more smart devices includes one or more smart plugs, one or more smart wall switches, one or more smart-home appliances, one or more smart luminary devices, one or more smart home entertainment devices, one or more smart security monitoring sensors, or any combination of one or more thereof.

Optionally, the system is further configured to: determine a section of electrical wiring affected by a detected electrical discharge, identify one or more smart devices connected to the affected section, and transmit a command to the one or more identified smart devices instructing the at least one smart device to be turned off. The load on an affected section of electrical wiring may accordingly be reduced, while smart devices connected to other sections of electrical wiring may still be kept turned on and functional.

Optionally, the smart-home system comprises a plurality of electrical discharge detectors. The plurality of electrical discharge detectors allows a determination to be made of where in an electrical wiring the electrical discharge is likely to have occurred.

Optionally, the electrical discharge detector comprises: a plug for connection to an outlet of the electrical wiring, a detection unit for detecting an electrical discharge, and a communication module for transmitting a detection signal to the smart-home system. The electrical discharge detector may accordingly be easily installed without the need for an electrician.

Optionally, the electrical discharge detector is configured to: measure an electrical signal waveform of the electrical wiring, identify one or more transient signals within the waveform; and detect the electrical discharge in dependence on transient characteristics of the one or more transient signals. It will be appreciated, however, that embodiments include any electrical discharge detection method.

In a second aspect, there is provided a security monitoring system for monitoring of a premises, the security monitoring system comprising a smart-home system according to the first aspect. Optionally, the security monitoring system further comprises a control unit configured to receive a detection signal from the electrical discharge detector in response to a detected electrical discharge, and to transmit a command instructing one or more of the smart devices to be turned off.

In a third aspect, there is provided a method of operating a system of a premises, wherein the method comprises: detecting, by an electrical discharge detector of the system, an electrical discharge in electrical wiring of the premises, and transmitting a command to one or more smart devices of the system instructing the one or more smart devices to be turned off. The system may be a smart-home system according to the first aspect and/or a security monitoring system according to the second aspect.

Optionally, the method further comprises: determining a section of electrical wiring affected by the detected electrical discharge, and identifying one or more smart devices connected to the affected section, wherein the command is transmitted to the one or more identified smart devices.

Optionally, the method further comprises: transmitting a request to a device, receiving a response from the device indicating at least one smart device to be turned off, wherein the command is transmitted to the at least one indicated smart device.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1a: is a schematic view of a security monitoring system according to embodiments;
- Fig. 1b: is a block diagram of a security monitoring system according to embodiments of the invention;
- Fig. 2: is a schematic view of an electrical discharge detector according to embodiments;
- Fig. 3: is a flowchart of an electrical discharge detection method according to embodiments;
- Fig. 4: is a schematic view of a smart-home system according to embodiments;
- Fig. 5: is flowchart of a method of operating a smart-home system and/or a security monitoring system according to embodiments; and
- Fig. 6: is flowchart of a method of operating a smart-home system and/or a security monitoring system according to embodiments.

Further, in the figures like reference characters designate like or corresponding parts throughout the several figures. The first digit in the reference character denotes the first figure in which the corresponding element or part appears.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

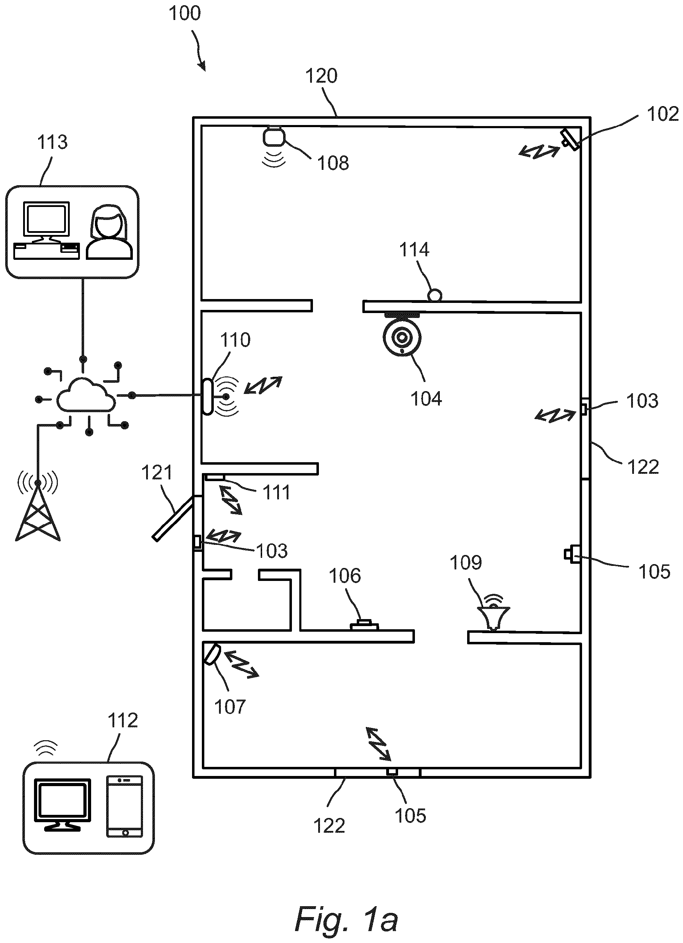

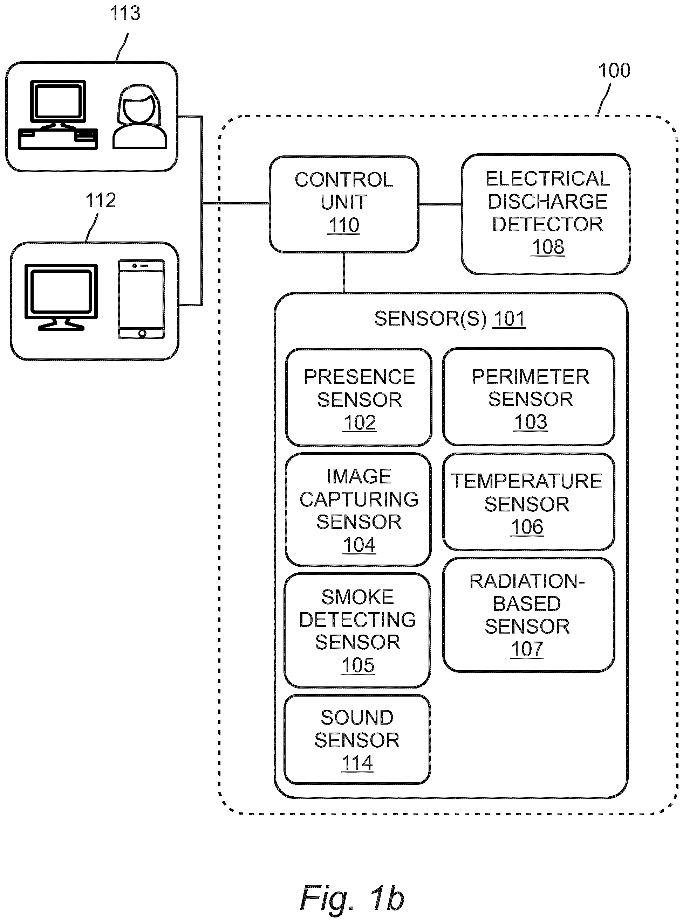

Figs. 1a and 1b show a security monitoring system 100, which may also be referred to as an alarm system, provided in a premises 120, in the form of a building. The premises 120 may be a residential building such as a house or an apartment, and/or a commercial building such as an office building, or the like.

In particular, Fig. 1a shows a plan view of the premises 120, while Fig. 1b shows a block diagram of the security monitoring system 100 which is installed in the premises 120.

The security monitoring system 100 is configured to detect alarm-incurring events (e.g. undesirable security or safety events or hazards), such as an intruder and/or a potential fire or a precursor to a fire.

The security monitoring system 100 comprises one or more sensors 101 for monitoring of the premises 120, for example, an interior or exterior area of the premises 120. While monitoring the premises 120, the sensors 101 are configured to detect an alarm-incurring event, e.g. to make an owner or occupant of the premises 120 aware of the alarm-incurring event.

The security monitoring system 100 may, for instance, include one or more sensors 101 for detecting an intruder entering or moving within the premises 120. Such sensors 101 may comprise one or more presence sensors 102, one or more perimeter sensors 103, one or more image capturing sensors 104, or a combination of any one or more thereof. Additionally, or alternatively, the security monitoring system 100 may include a sensor 101 for detecting a potential fire or precursor to a fire within the premises 120. For example, the security monitoring system 100 may comprise a smoke detecting sensor 105 (i.e. a smoke detector) configured to detect smoke inside the premises 120. The security monitoring system 100 may further comprise one or more temperature sensors 106 for monitoring a temperature within the premises 120, and/or one or more other sensors 101 for monitoring one or more parameters and/or characteristics of the premises 120 or its interior.

A presence sensor 102 may be defined as a sensor 101 sensitive to the presence or movement of persons and/or objects within an area monitored by the presence sensor 102. Presence sensors 102 may thus include motion or passage sensors sensitive to motion or passage of a person and/or object within the premises 120. In particular, any type of sensor or detector capable of detecting presence, and/or movement of a person and/or object, may be used as a presence sensor 102.

For example, the presence sensor 102 may comprise a radiation-based sensor 107 for detecting an amount of incident radiation (such as thermal or infrared radiation), or the like. In particular, the presence sensor 102 may include an infrared sensor such as a thermal-MOS (TMOS) sensor and/or a passive infrared sensor (also referred to as a PIR sensor).

As another example, the presence sensor 102 may comprise a sound sensor 114 such as a microphone configured to monitor and/or detect sounds within the premises 120. It will be appreciated that the sound sensor 114 may be integrated in, or form part of or another component of the security monitoring system 100. For example, there may be a microphone integrated in the image capturing sensor 104, the input means 111 and/or the control unit 110.

Other examples of presence sensors 102 include line-of-sight sensors, optical sensors, visual sensors, thermal sensors, and/or image sensors (e.g. including a camera).

A perimeter sensor 103, on the other hand, may be defined as a sensor 101 configured to detect persons and/or objects crossing or breaching a perimeter of the premises 120 such as person and/or object entering through a door 121 or a window 122. Exemplary perimeter sensors 103 include magnetic sensors arranged at windows 122 and/or doors 121, and/or glass breakage sensors (such as a shock sensor) for detecting breakage of e.g. a window or glass door.

In embodiments, the security monitoring system 100 may comprise at least one sensor 101 comprising image capturing means, such as a camera (e.g. a photographic camera), video camera or any other type of type of optical sensing device capable of capturing or acquiring one or more still and/or moving images. Such a sensor may accordingly be referred to as an image capturing sensor 104. The image capturing sensor 104 is configured to capture one or more images of an area of the premises 120 proximate to where it is located. For instance, the image capturing sensor 104 may capture images of the room in which it is located.

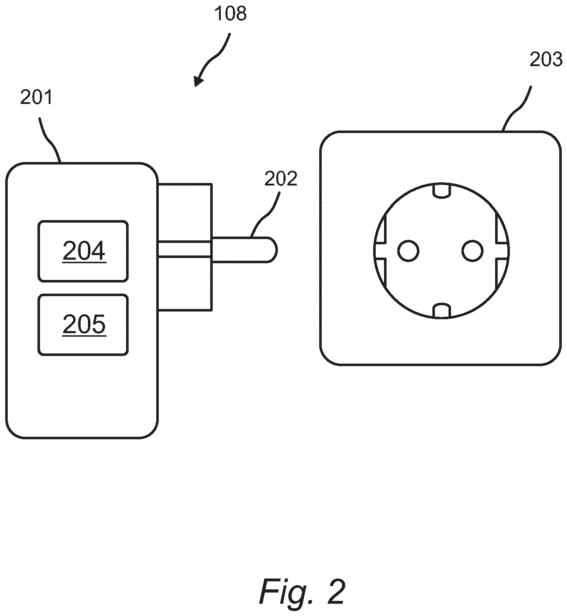

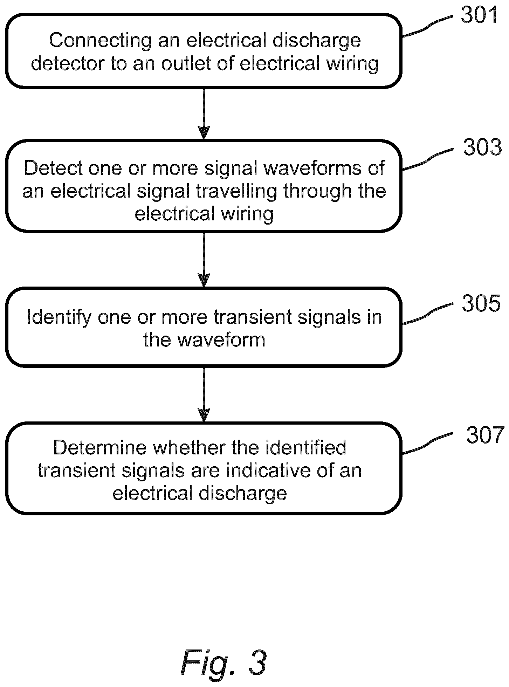

In addition to the above-described sensors 101, the security monitoring system 100 comprises at least one electrical discharge detector 108 for detecting electrical discharges in the electrical wiring of the premises 120. The electrical discharge detector 108 will be described further in relation to Figs. 2 and 3.

The security monitoring system 100 may comprise one or more alarm indicators 109 such as a visual alarm indicator (e.g. a flashing light), an audible alarm indicator (e.g. a siren), or the like, that may be activated in the event of an alarm-incurring event being detected.

The security monitoring system 100 may further comprise a control unit 110 which may also be referred to as a central unit. The control unit 110, which is generally mains powered, is coupled or connected to the sensors 101 and the electrical discharge detector 108, and is configured to process signals received therefrom and determine a response. The sensors 101 and the electrical discharge detector 108 may, for example, be provided with wireless (e.g. via Wi-Fi, radio frequency, or the like) and/or wired communication means for communicating with the control unit 110. In particular, the sensors 101 may be coupled to the control unit 110 using transceivers that may operate in the industrial scientific and medical (ISM) bandwidths, for example a sub-gigahertz bandwidth such as 868 MHz, and the communications may be encrypted preferably using shared secret keys.

The control unit 110 may include a processor and an alert triggering unit for providing an alert signal when the security monitoring system 100 is triggered or set off, e.g. when an alarm-incurring event has occurred.

The control unit 110 may also be connected to input means 111 allowing a user to interact with the control unit 110. The input means 111 may be a keypad or similar, for arming and disarming the sensors 101 so as to arm and disarm the security monitoring system 100. In the illustrated embodiment, the input means 111 is arranged in the vicinity of the entrance door 121. In some embodiments, the input means 111 comprises voice-controlled input means.

The control unit 110 may communicate with one or more user devices 112, which may be almost any kind of electronic device such as a smartphone, tablet, laptop or desktop computer, a smart watch, or even a television. For example, the control unit 110 may communicate with an app or other program installed on such user devices 112 allowing the user to interact with the control unit 110 and/or the security monitoring system 100.

The user device 112 may also be loaded with a public land mobile network (PLMN) by means of which the control unit 110 (and/or a remote monitoring centre 113 as will be described later) may communicate with the user device 112. The user device 112, and in particular the app or program installed thereon, may thus form input means 111 to the control unit 110 such that the user can, through the user device 112, instruct the control unit 110 to arm or disarm the security monitoring system 100, or the like. The user device 112 may also provide the user with information relating to a state of the security monitoring system 100 (e.g. if it is in an armed or disarmed state) and/or of one or more of its sensors 101. The security monitoring system 100 may accordingly notify the user via the user device(s) 112 if and when the security monitoring system 100 is set off or triggered.

The control unit 110 may further be connected to a remote monitoring centre 113, which is located remotely from the premises 120. The control unit 110 may accordingly be configured to transmit alert signals to the remote monitoring centre 113, where operators (i.e. human operators) and/or computerised systems manage the alert signals and determines an appropriate action. That is, the control unit 110, typically located in the premises 120, is configured to process notifications and signals received from the sensors 101 and/or the electrical discharge detector 108, and to notify the remote monitoring centre 113 of at least some of these signals that corresponds to or are indicative of an alarm-incurring event (e.g. an undesirable security or safety event), depending upon the settings of the system and the nature of the detected events. In such a configuration, the control unit 110 at the installation is effectively acting as a gateway between the sensors 101 and the remote monitoring centre 113.

The control unit 110 may be connected to the remote monitoring centre 113 by wires, such as a telephone line, or by a wireless telecommunications system such as GSM or other radio frequency systems. The connection may also be through the internet or any other suitable network.

Hence, operation of the security monitoring system 100 may be controlled by one or more of: the control unit 110, the remote monitoring centre 113, and a security monitoring app installed on a user device 112. For example, the remote monitoring centre 113, if provided, may receive one or more signals from any of the sensors 101 and/or the electrical discharge detector 108. The remote monitoring centre 113 may transmit commands for controlling any one or more of: the arm state of the security monitoring system 100 (e.g. armed or unarmed), commanding a tripped alarm state to be signalled by the security monitoring system 100 (e.g. by triggering one or more alarm indicators to generate alarm noise), commanding operation of one or more functions of the sensors 101 and/or electrical discharge detector 108. Communication with the remote monitoring centre 113 may pass through the control unit 110. In other embodiments without the remote monitoring centre 113, or should communication with the remote monitoring centre 113 be interrupted, operation of the security monitoring system 100 may be controlled by the control unit 110. In yet other embodiments, the control unit 110 may be omitted, and the sensors 101 and/or the electrical discharge detector 108 may instead communicate independently with the remote monitoring centre 113, for example, via wireless communication (such as Cat-M LTE).

Howsoever the communication is implemented, the remote monitoring centre 113 may alert one or more operators of an alarm-incurring event. The one or more operators may monitor communications received from the security monitoring system 100. Thus, the one or more operators may, in response to an alert signal being transmitted, send a patrol unit and/or the emergency services to the premises 120 and/or notify an owner or resident of the premises 120.

Fig. 2 shows a schematic view of the electrical discharge detector 108. The electrical discharge detector 108 is configured to detect electrical discharges occurring in electrical wiring of a premises 120.

The electrical discharge detector 108 comprises a detection unit 201, and a plug 202 for connection to an electrical outlet 203 (e.g. a socket) of electrical wiring of the premises.

The plug 202 is configured to electrically couple the detection unit 201 to the electrical wiring of the premises 120, while the detection unit 201 is configured to measure an electrical signal of the electrical wiring at the location where the electrical discharge detector 108 is connected.

Here it is noted that the electrical discharge detector 108 is intended to be connected directly to the electrical wiring by insertion of the plug 202 into a standard electrical outlet 203. The electrical discharge detector 108 may accordingly be installed without the need for an electrician.

The detection unit 201 may comprise a processing module 204 and a communication module 205. The processing module 204 may comprise signal measuring means for measuring the electrical signals travelling through the electrical wiring as waveform data, a signal converter such as an analog-to-digital signal converter, a signal amplifier, and/or one or more filters for filtering out 50Hz and/or 60Hz signals and/or electrical noise generated by appliances and devices connected to the electrical wiring. The filters and/or amplifiers may be achieved using hardware and/or software.

In some embodiments, at least part of the processing is performed remotely from the electrical discharge detector 108. That is, the electrical discharge detector 108 may be configured to transmit the measured electrical signal to a remotely located processor which may be configured to process and analyse the received electrical signal.

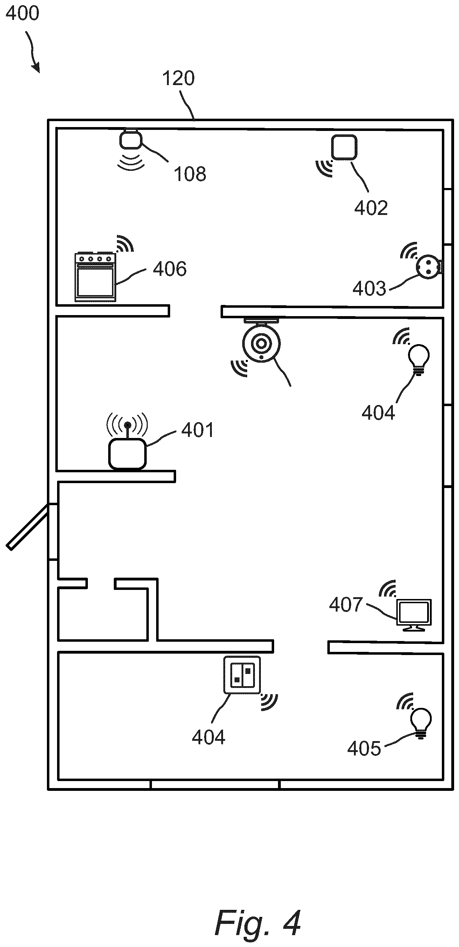

The communication module 205 allows the electrical discharge detector 108 to communicate with other devices, and in particular with the security monitoring system 100, the control unit 110, the remote monitoring centre 113, one or more user devices 112, the emergency services, a smart-home system 400 (as will be described later in relation to Fig. 4) and/or a smart-home controller 401 (as will also be described later in relation to Fig. 4). The communication module 205 may comprise wired or wireless communication means. For instance, the communication module 205 may comprise a radio transceiver configured to communicate over any known radio communication protocol including a Wi-Fi protocol, such as the IEEE 802.11 standard, Bluetooth protocol, and/or a protocol using single-sideband channel communication, optionally one operating on an ISM band such as the European 863MHz to 870MHz frequency band (e.g. around 868MHz).

The electrical discharges typically occur when the integrity of an electrical wire or its insulation is compromised. For example, the electrical wire or its insulation may be damaged (e.g. physical damage, and/or water damage), corroded, aged, or the like, or one or more connections between the electrical wire and another electrical component may have come loose. Such damage may lead to sporadic electrical discharges within the wire and/or between the wire and another electrical conductor.

As the electrical discharges continue over time, the damage or erosion to the insulation or other materials surrounding the wire is worsened, increasing the intensity of the electrical discharges. Hence, after sufficient time has passed, the electrical discharges may become high-power, continuous and high-temperature discharges which may eventually result in the ignition of a spark or fire in the material in which the electrical wiring is arranged which is often combustible (e.g. wood and/or insulation in the walls of the premises).

It is accordingly important to detect electrical discharges in electrical wiring as early as possible to reduce the risk of a fire. Hence, by detecting electrical discharges, a user (e.g. the occupant or owner of the premises 120) and/or emergency services can be alerted to the faulty electrical wiring, hopefully in time to prevent a fire from starting and/or put out a fire at an early stage.

The electrical discharge detector 108 can detect electrical discharges by monitoring the electrical signals travelling through the electrical wiring. As the electrical discharges give rise to a sharp electromagnetic impulse (e.g. an impulse of current), the electrical discharge detector 108 is configured to identify any impulses likely to originate from an electrical discharge.

Upon detection of an electrical discharge, the electrical discharge detector 108 may be configured notify a user (e.g. an occupant or owner of the premises 120) of the detected electrical discharge. The electrical discharge detector 108 may accordingly comprise one or more notification means, e.g. comprising visual notification means (e.g. a flashing light), audible notification means (e.g. a siren), or the like. Alternatively, or additionally, the electrical discharge detector 108 may be configured to send a notification signal to the security monitoring system 100 installed in the premises 120.

The electrical discharge detector 108 may be configured to detect electrical discharges by the method of Fig. 3. It will be appreciated that the detection method of Fig. 3 is purely exemplary, and embodiments also include detection of electrical discharges by any other suitable method.

In step 301, the electrical discharge detector 108 is connected to an outlet 203 of the electrical wiring of the premises 120. This connection is usually performed when the electrical discharge detector 108 is first installed in the premises 120, after which the electrical discharge detector 108 typically remains connected to the outlet 203.

In step 303, the electrical discharge detector 108 senses or detects an electrical signal travelling through the electrical wiring of the premises 120. In particular, the electrical discharge detector 108 captures one or more signal waveforms (e.g. voltage and/or current waveforms) generated by electrical activity in or connected to the electrical wiring.

In step 305, the electrical discharge detector 108 identifies one or more transient signals in the waveform. Because electrical discharges involve an impulse change in current (as explained previously), the electrical signal generated or caused by said electrical discharge is transmitted along the electrical wiring which can be identified by the electrical discharge detector 108 as transient signals. Accordingly, the electrical discharge detector 108 is configured to detect a change in the signal waveform data in order to identify one or more transient signals in the waveform. The identification of transient signals may be performed using any known method or process, including but not limited to processes involving binning of sampled waveform data, use of floating thresholds of samples in the waveform data, calculation of derivates and/or maximums, or the like.

In step 307, the electrical discharge detector 108 analyses the identified transient signals to determine whether the identified transient signals are indicative of an electrical discharge. For example, the electrical discharge detector 108 may generate and analyse one or more transient characteristics in dependence on the identified transient signals. The generation of transient characteristics may be performed using any known method or process, including but not limited to, methods involving calculating the average transient amplitude over a full voltage cycle and/or for phase sections within the voltage cycle, calculating the amplitude, pulse width, integral and/or rise time of peaks of the transient, or the like.

In analysing the transient characteristics, the electrical discharge detector 108 may identify one or more electrical discharge indicators in the transient characteristics, for example by comparing the transient characteristics to reference data and characteristics, and/or data associated with previously detected electrical discharges, which may be stored in a memory of the electrical discharge detector 108.

As an example, the electrical discharge detector 108 may reconstruct the signal waveform using the generated transient characteristics and compare the distribution of transients in the reconstructed waveform to an expected or reference transient distribution. Here it is noted that the transient signals generated by an electrical discharge travel along the electrical wiring being reflected at any junction. The signals caused by the electrical discharge experience a delay in returning which is dependent on the length of the wire, as well as exhibiting a phase shift.

Hence, if the comparison shows that the transients occur in phase and/or in a regular or repeatable pattern, the transients are likely a result of (normal) operation of a device or appliance connected to the electrical wiring. Alternatively, if the comparison shows that the transients are out of phase and/or in an irregular pattern, this indicates that the transients are a likely result of one or more electrical discharges.

As another example, the electrical discharge detector 108 may compare the generated transient characteristics to reference characteristics data and/or reference characteristics thresholds using any known or suitable method. For instance, the electrical discharge detector 108 may determine the average peak ratio of transients in phase sections of the voltage cycle close to maximum voltage to transients in phase sections of the voltage cycle close to zero voltage, and compare the determined ratio with a threshold value where, if the ratio is above the threshold value, the transient signals are determined as being indicative of an electrical discharge. As another example, the electrical discharge detector 108 may determine if the number of peaks in the transient exceeds a threshold and/or if the rise time for the one or more of the peaks is greater than a threshold. If so, the transient may be determined to be indicative of an electrical discharge.

In some embodiments, the electrical discharge detector 108 may calculate a likelihood value of an electrical discharge having occurred, for example in dependence on how irregular and/or out of phase the transient signals are and/or how far above/below the characteristics are from one or more thresholds. The likelihood value may then be compared to a threshold value to determine whether an electrical discharge has been detected.

In some embodiments, the analysis of transient characteristics may be improved by machine learning techniques, e.g. for determining appropriate threshold levels and/or appropriate reference data.

Once a transient signal has been determined to be indicative of an electrical discharge, i.e. when a likely electrical discharge has been detected, the electrical discharge detector 108 may notify a user and/or send a notification signal to the security monitoring system 100 installed in the premises 120.

Fig. 4 shows a smart home system 400 installed alongside the security monitoring system 100 in the premises 120. The security monitoring system 100 is, however, for convenience not shown in Fig. 4.

In this context, "smart home system" should be understood as a system of connected (e.g. network-connected and/or internet-connected) devices in a premises together with a hub or other controller connected to the plurality of devices and being configured to control the plurality of devices. Hence, the smart-home system 400 may enable remote control, monitoring and/or management of the connected devices.

Although the term "smart-home system" is used throughout the present disclosure, it will be appreciated that this term is not limited to residential "homes" but includes any type of premises 120 such as single family or multi-unit residences, out-buildings, businesses, stores, factories, warehouses, restaurants, entertainment venues, and so forth. Also, the term "smart-home system" should be understood to mean any system formed by smart devices 402 that communicate with a hub or controller 401 and/or one another.

In this context, "smart devices" or "smart-home devices" may be defined as interconnected and/or network-connected devices that may be controlled remotely, e.g. via a smart-home controller (such as a hub).

In this context, "smart-home controller" should be understood to mean any device or unit configured to remotely control one or more smart devices, for example, over a network to which the smart-home controller and the smart devices are connected.

The smart home system 400 comprises a smart-home controller 401 (e.g. a smart-home hub) and one or more of smart devices 402.

The smart-home controller 401 is configured to control the smart devices 402 of the smart-home system 400. This smart-home controller 401 may be in the form of a hub, which is often a hardware device located in the premises 120, that acts as a central point of the smart-home system 400 and can process data and communicate wirelessly. However, the smart-home controller 401 may also be a remotely located controller, for example in the form of a central server, cloud-computing system or any other device (such as a smartphone or the like) that is network-connected anywhere in the world.

The smart-home controller 401 may be configured to communicate with the security monitoring system 100, the control unit 110 and/or be part of the control unit 110 of the security monitoring system 100. In some embodiments, the control unit 110 of the security monitoring system 100 may act as the smart-home controller 401.

In such configurations, the security monitoring system 100 and/or the control unit 110 may be configured to transmit instructions to the smart devices 402, e.g. either directly (by the control unit 110 acting as the smart-home controller 401) or indirectly via the separate smart-home controller 401 (the smart-home controller 401 effectively acting as a gateway between the smart devices 402 and the security monitoring system 100). The instructions may relate to the control of the smart devices 402, such as instructions relating to the control of one or more settings of the relevant smart device(s) 402.

The one or more smart devices 402 may include any devices that are connected to the network on which the smart-home system 400 is configured to operate, and which can be controlled remotely, e.g. by the smart-home controller 401. In particular, the smart devices 402 may be mains-powered such that they are connected to electrical wiring of the premises 120.

For example, the one or more smart devices 402 may include one or more smart plugs 403 (which may also be referred to as smart electrical outlets and/or smart electrical sockets), one or more smart wall switches 404, one or more smart luminary devices 405, one or more smart home appliances 406, one or more smart home entertainment devices 407, one or more smart security monitoring sensors 408, or any combination thereof.

A smart plug 403 may be defined as any type of network-connected plug, socket or other electrical outlet to which a device (such as a non-communicating legacy device) may be connected (by electrically connecting the device to the smart plug 403). The smart plug 403 can be installed in any existing electrical socket or outlet to enable remote control, over the network, of the electrical power supply from the electrical socket or outlet to the device connected to the smart plug 403. In particular, the smart-home controller 401 may remotely turn on or off the smart plug 403 so as to control the supply of power to the device connected to the smart plug 403.

A smart wall switch 404 may be defined as a network-connected wall switch that may be installed in place of ordinary wall switches to allow the switch to be controlled over the network, e.g. by the smart-home controller 401, rather than only by physical touch as is required by ordinary wall switches. The smart wall switch 404 may accordingly be used to control a luminary device, a blind, or any other device connected to the smart wall switch 404. The smart wall switch 404 may act as a simple switch (on/off) or as a dimmer or the like.

A smart luminary device 405 may be defined as a network-connected luminary device (which may also be referred to as a light-emitting device) that may be controlled remotely, e.g. by the smart-home controller 401. The smart luminary device 405 may be configured to emit visible light so as to light up its surroundings. Examples of smart luminary devices 405 include smart lightbulbs, smart lamps, smart LEDs, or the like. The term "smart luminary device" may also include non-communicating legacy luminary devices controlled by a smart wall switch 404 and/or a smart plug 403 because such luminary devices may also be remotely controlled (via the smart wall switch 404 and/or smart plug 403).

A smart home appliance 406 may be defined as a network-connected home appliance device (e.g. a home appliance device or unit) that may be controlled remotely, e.g. by the smart-home controller 401. The smart home appliance 406 may be any of a wide range of home appliances that are network-connected, including but not limited to smart kitchen appliances, smart stoves and/or ovens, smart refrigerators, smart freezers, smart microwave ovens, smart washing machines, smart drying machines, smart HVAC systems, smart thermostats, smart heaters, smart electrically heated radiators, smart intercom systems, smart garage-door openers, smart floor fans, smart ceiling fans, smart irrigation systems, smart pool heaters, or the like. It will be appreciated that the parameters or functions that may be remotely controlled by the smart-home controller will vary depending on the type of home appliance, but would normally include at least a turning on or off of the smart home appliance 406.

In a similar way, a smart home entertainment device 407 may be defined as a network-connected home entertainment device that may be controlled remotely, e.g. by the smart-home controller 401. Such entertainment devices may include, for instance, visual entertainment devices and/or audio-based entertainment devices. Examples of smart home entertainment devices 407 include smart speakers, smart stereos, smart televisions, or the like.

A smart security monitoring sensor 408 may be defined as a network-connected security monitoring sensors that may be controlled remotely, e.g. by the smart-home controller 401. Examples of smart security monitoring sensors 408 include smart security monitoring cameras, smart video doorbells, or any of the previously described sensors which have been provided with smart connection means.

Each of the smart devices 402 may be able to perform some form of function in response to a command received from the smart-home controller 401. For example, possible commands may be instructions to turn on, turn off, dim, lock, unlock, play, pause, stop, turn the volume up, turn the volume down, mute, hush, turn the temperature up, turn the temperature down, etc.

The smart devices 402 need not be physically located within the premises 120 but may be located in the garden, an outbuilding, or the like instead. For example, a smart device 402 controlling a pool heater or irrigation monitor can be located outside of the premises 120.

It is noted that the smart-home system 400 may be used, through smart plugs 403 and/or smart wall switches 404, to control a variety of non-communicating legacy appliances and devices, such as old conventional washer/dryers, refrigerators, lights, and the like, although such control may be limited to a mere turning on and off of the appliances.

The smart devices 402 may have been acquired from various sources. For example, a first entity (e.g., manufacturer) may produce some of the smart devices 402, while a second entity may produce the remaining smart device(s) 402.

The required data communications between smart devices 402 and the smart-home controller 401 can be carried out using any of a variety of custom or standard wireless protocols (such as IEEE 802.11 based protocols ("Wi-Fi"), Bluetooth or Bluetooth Low Energy ("BLE"), 3G/4G wireless, IEEE 802.15.4 based protocols such as ZigBee or 6LoWPAN, Z-Wave, or the like) and/or any of a variety of custom or standard wired protocols (CAT6 Ethernet, HomePlug, or the like).

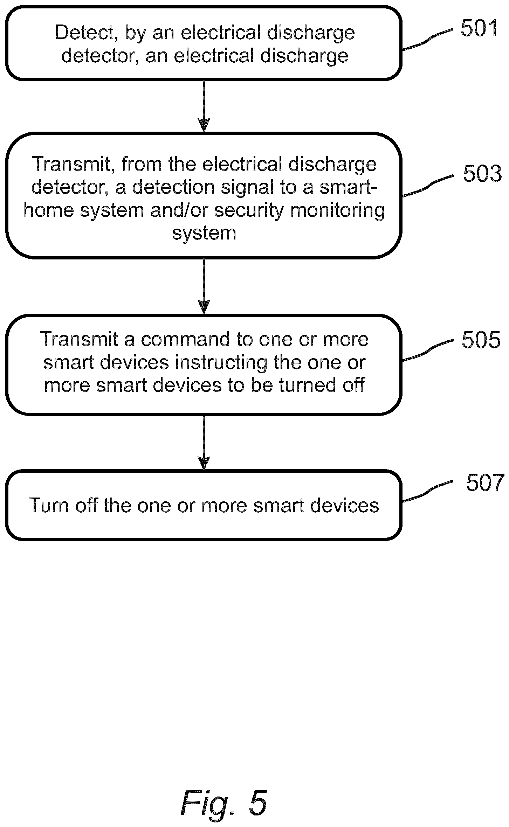

Although described in combination with the security monitoring system 100, it will be understood that the smart-home system 400 according to embodiments may be independently installed in a premises 120 without a security monitoring system 100. Similarly, it will be appreciated that the electrical discharge detector 108 may be provided as part of the smart-home system 400 instead of as part of the security monitoring system 100, in which case the smart-home system 400 (and the methods described later in relation to Figs. 5 to 6) may be conveniently used also in premises 120 without a security monitoring system 100. In such a configuration, the electrical discharge detector 108 may be configured to communicate directly with the smart-home controller 401.

Fig. 5 shows a method of operating the smart-home system 400 and/or the security monitoring system 100.

In step 501, an electrical discharge, which could be a precursor to a fire, is detected. The electrical discharge may be detected by the electrical discharge detector 108 or by any other suitable method or device. The detection in step 501 may be carried out according to the method of Fig. 3.

In step 503, the electrical discharge detector 108 may then transmit a detection signal in response to the detected electrical discharge. The detection signal may be transmitted to the security monitoring system 100 and/or the smart-home system 400 to notify the respective system that an electrical discharge has been detected. For instance, the detection signal may be transmitted to the control unit 110 and/or the smart-home controller 401.

In step 505, a command is transmitted to one or more smart devices 402 instructing the one or more smart devices 402 to be turned off. In particular, the one or more smart devices 402 may be instructed to turn off in response to, or after, the electrical discharge has been detected.

At least one, and optionally all, of the one or more smart devices 402 that are instructed to be turned off is connected to the electrical wiring in the premises 120. Hence, the load on the electrical wiring is reduced, which in turn may reduce the risk of a potential fire arising as a consequence of the detected electrical discharge or any subsequent electrical discharges.

It is noted that in some embodiments, the smart-home system 400 may simply turn off all of its smart devices 402 irrespective of whether they are connected to the electrical wiring in which the electrical discharge has been detected or not, whereas in other embodiments, the system may only turn off those smart devices 402 connected to the electrical wiring (i.e. those that are mains-powered).

In some embodiments, all smart devices 402 connected to the electrical wiring may be turned off, while in other embodiments, only some of the smart devices 402 connected to the electrical wiring may be turned off, for instance if turning off one or more of the remaining smart devices 402 would be inappropriate (e.g. if one of the smart devices 402 is a smart refrigerator or freezer which must be turned on in order to keep the food therein safe, or the like).

The command may be transmitted from the control unit 110 and/or the smart-home controller 401. For example, the control unit 110 may receive the detection signal from the electrical discharge detector 108, and thereafter transmit the command to the smart devices 402. As another example, the control unit 110 may receive the detection signal from the electrical discharge detector 110, after which the control unit 110 transmits a command signal to the smart-home controller 401 which in turn transmits the command to the smart devices 402 to be turned off. In another example, the electrical discharge detector 108 may transmit the detection signal to the smart home controller 401 (e.g. if there is no security monitoring system 100 installed in the premises 120, or if the electrical discharge detector 108 is connected to or part of the smart-home system 400) which transmits the command to the smart devices 402. As yet another example, the electrical discharge detector 108 may transmit the detection signal directly to the smart devices 402 (e.g. if the electrical discharge detector 108 is connected to the same network as the smart devices 402 and able to communicate with the smart devices 402 over said network), in which case the command may be part of the transmitted detection signal.

It will accordingly be appreciated that the electrical discharge detector 108 and the smart devices 402 may be communicatively connected and any communications (e.g. signals and/or commands) transmitted between the electrical discharge detector 108 and the smart devices 402 may be transmitted directly, or pass through the control unit 110 and/or the smart-home controller 401.

In some embodiments, the device (e.g. the control unit 100 and/or the smart-home controller 401) that receives the detection signal from the electrical discharge detector 108 may be configured to transmit a request to a device (e.g. a user device 112 such as a smart-phone with a smart-home system application and/or a security monitoring system application, the input means 111, a device of the remote monitoring centre 113) asking a user or operator to indicate if any smart devices 402 are to be turned off. The request may, for example, include a list of smart devices 402 that could potentially be turned off, where the user or operator can select those smart devices 402 that they wish to be turned off, or the request may simply be a request to approve or deny whether to turn off smart devices 402. Upon receiving a response from the device, the smart-home system 400 may command smart devices 402 to be turned off in accordance with the response from the device. In some embodiments, the smart-home system 400 may be configured to turn off the smart devices 402 if no response is received from the device within a predetermined time period.

In step 507, the one or more smart devices 402 are turned off in response to the transmitted command.

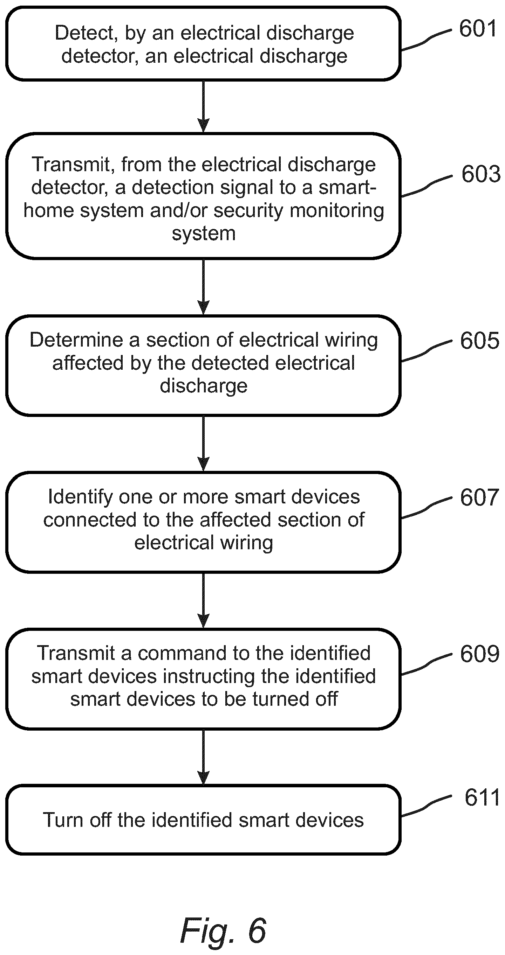

Fig. 6 shows another method of operating the smart-home system 400 and/or the security monitoring system 100, where the system is configured to identify one or more smart devices 402 connected to an affected section of electrical wiring.

In step 601, an electrical discharge, which could be a precursor to a fire, is detected. The electrical discharge may be detected by the electrical discharge detector 108 or by any other suitable method or device. This step substantially corresponds to step 501 of Fig. 5.

In step 603, the electrical discharge detector 108 may then transmit a detection signal in response to the detected electrical discharge. The detection signal may be transmitted to the security monitoring system 100 and/or the smart-home system 400 to notify the respective system that an electrical discharge has been detected. For instance, the detection signal may be transmitted to the control unit 110 and/or the smart-home controller 401.

In step 605, the system determines an affected section of electrical wiring. The affected section is a section of electrical wiring in which the electrical discharge has likely occurred.

Step 605 may comprise determining to which electrical wiring the electrical discharge detector 108 (which detected the electrical discharge) is connected. For example, the premises 120 may comprise two or more separate electrical wirings of which only one was affected by the detected electrical discharge. Here it is noted that the system may comprise more than one electrical discharge detector 108, for example one electrical discharge detector 108 per electrical wiring, and the system may therefore easily determine which electrical wiring was affected by the detected electrical discharge by knowing to which electrical wiring the electrical discharge detector(s) 108 are connected.

Step 605 may alternatively, or additionally, comprise determining a section of an electrical wiring in which the detected electrical discharge likely occurred. To accomplish this, the system may comprise a plurality of electrical discharge detectors 108 connected to the same electrical wiring, e.g. a first electrical discharge detector 108 connected to a first electrical outlet 203 of the electrical wiring and a second electrical discharge detector 108 connected to a second electrical outlet 203 of the same electrical wiring.

The section of the electrical wiring in which the electrical discharge is likely to have occurred may then be determined using time-of-arrival techniques for the transient signals identified by the plurality of electrical discharge detectors 108. In particular, a time difference between the arrival of a transient signal at a first electrical discharge detector 108 and the arrival of the same transient signal at a second electrical discharge detector 108 may be used to determine a relative distance for each of the electrical discharge detectors 108 to the location of the electrical discharge. In particular, the two electrical discharge detectors 108 can use the pulse shape to recognise the relevant transient signal caused by the electrical discharge (from the remaining signal), and accordingly calculate a time difference between the arrival of the (same) relevant transient signal for the two electrical discharge detectors 108. The system may thereafter determine an affected section of the electrical wiring in dependence on where the two electrical discharge detectors 108 are located and the layout of the electrical wiring in the premises.

In step 607, which is generally performed after the affected section of electrical wiring has been determined, one or more smart devices 402 are identified that are connected to the affected section of electrical wiring.

Here it is noted that the smart-home system 400 (and in turn the smart devices 402) may cover an area which does not exactly correspond to an area covered by a single electrical wiring. Thus, different smart devices 402 of the smart-home system 400 may be connected to different electrical wirings. For example, the smart-home system 400 (and in particular the network on which it operates) may cover the entire premises 120 while there may be two separate electrical wirings covering that same area. As another example, a main building of the premises 120 may have a first electrical wiring and an outbuilding (or the like) may have a second electrical wiring, while the smart-home system 400 extends to cover both the main buidling and the outbuilding.

In order to identify the smart devices 402 connected to the affected section of electrical wiring, the smart-home system 400 and/or security monitoring system 100 may know the (approximate) location of smart devices 402 within the premises 120.

For example, when a smart device 402 is first plugged in and installed as part of the smart-home system 400, the smart-home system 400 may ask the user to indicate where the smart device 402 is located, e.g. if it is located in the "living room", "kitchen" and so forth. The smart-home controller 401 may accordingly store this location information which may be used to identify the relevant smart devices 402.

Once the one or more smart devices 402 have been identified, a command is sent, in step 609, to the identified smart device(s) 402 instructing the one or more identified smart devices 402 to be turned off. This step thus substantially corresponds to step 505 of Fig. 5.

In step 611, the identified one or more smart devices 402 are turned off in response to the transmitted command.

The various embodiments described above are provided by way of illustration only and should not be construed to limit the invention. For example, the principles herein may be applied to any smart-home system and/or security monitoring system. Those skilled in the art will readily recognize various modifications and changes that may be made to the present invention without following the example embodiments and applications illustrated and described herein, and without departing from the scope of the present disclosure.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element also includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A smart-home system for installation in a premises, the smart home system comprising:
one or more smart devices, and
an electrical discharge detector configured to detect electrical discharges in electrical wiring of the premises.

2. The smart-home system according to claim 1, wherein the system is configured to, in response to a detected electrical discharge, transmit a command to at least one of the smart devices instructing the at least one smart device to be turned off.

3. The smart-home system according to claim 2, wherein the smart-home system comprises a smart-home controller configured to transmit the command to the at least one smart device.

4. The smart-home system according to any preceding claim, wherein the one or more smart devices includes one or more smart plugs, one or more smart wall switches, one or more smart-home appliances, one or more smart luminary devices, one or more smart home entertainment devices, one or more smart security monitoring sensors, or any combination of one or more thereof.

5. The smart-home system according to any preceding claim, wherein the one or more smart devices are configured to be connected to the electrical wiring.

6. The smart-home system according to any preceding claim, wherein the system is further configured to:
determine a section of electrical wiring affected by a detected electrical discharge,
identify one or more smart devices connected to the affected section, and
transmit a command to the one or more identified smart devices instructing the at least one smart device to be turned off.

7. The smart-home system according to any preceding claim, wherein the smart-home system comprises a plurality of electrical discharge detectors.

8. The smart-home system according to any preceding claim, wherein the electrical discharge detector comprises:
a plug for connection to an outlet of the electrical wiring,
a detection unit for detecting an electrical discharge,
and a communication module for transmitting a detection signal to the smart-home system.

9. The smart-home system according to any preceding claim, wherein the electrical discharge detector is configured to:
measure an electrical signal waveform of the electrical wiring,
identify one or more transient signals within the waveform; and
detect the electrical discharge in dependence on transient characteristics of the one or more transient signals.

10. A security monitoring system for monitoring of a premises, the security monitoring system comprising a smart-home system according to any preceding claim.

11. The security monitoring system according to claim 10, wherein the security monitoring system further comprises a control unit configured to receive a detection signal from the electrical discharge detector in response to a detected electrical discharge, and to transmit a command instructing one or more of the smart devices to be turned off.

12. A method of operating a system of a premises, wherein the method comprises:
detecting, by an electrical discharge detector of the system, an electrical discharge in electrical wiring of the premises, and
transmitting a command to one or more smart devices of the system instructing the one or more smart devices to be turned off.

13. The method according to claim 12, wherein the system is a smart-home system according to any of claims 1-9 or a security monitoring system according to any of claims 10-11.

14. The method according to claim 12 or 13, wherein the method further comprises:
determining a section of electrical wiring affected by the detected electrical discharge, and
identifying one or more smart devices connected to the affected section,
wherein the command is transmitted to the one or more identified smart devices.

15. The method according to any of claims 12-14, wherein the method further comprises:
transmitting a request to a device,
receiving a response from the device indicating at least one smart device to be turned off,
wherein the command is transmitted to the at least one indicated smart device.
